Europäisches Patentamt

European Patent Office

Office européen des brevets

(11) Publication number: 0 292 121
A2

# EUROPEAN PATENT APPLICATION

(21) Application number: 88303726.9

(51) Int. Cl.⁴: **B29C 65/10**

(22) Date of filing: 26.04.88

(30) Priority: 21.05.87 US 53206

(43) Date of publication of application:
23.11.88 Bulletin 88/47

(84) Designated Contracting States:
AT BE CH DE ES FR GB GR IT LI LU NL SE

(71) Applicant: W.L. GORE & ASSOCIATES, INC.
555 Paper Mill Road P.O. Box 9206
Newark Delaware 19714(US)

(72) Inventor: Jolley, Emory A,.
1 Cummings Court Kiamensi Heights
Wilmington DE 19804(US)
Inventor: Woods, James J.
78 Overbrook Lane
Elkton MD 21921(US)

(74) Representative: Taylor, Derek George et al
Mathisen, Macara & Co. The Coach House
6-8 Swakeleys Road
Ickenham Uxbridge UB10 8BZ(GB)

(54) Hot air nozzle for a sealing machine.

(57) A device, for use in a seam sealing machine, for directing hot air on to an adhesive-coated tape comprises a nozzle (6) having a convex wall (6a) of a width corresponding to the width of a tape, the convex wall, together with two parallel-spaced side walls (6b) defining a chamber to which hot air is supplied, the convex wall containing a two dimensional pattern of air-flow passages (14) for directing a pad of hot air on to the tape over the full width and over a substantial length of the tape.

## FIG. 2.

EP 0 292 121 A2

## HOT AIR NOZZLE FOR A SEALING MACHINE

This invention relates to a device, for use in a sealing machine, for directing hot air on to a tape.

In a seam-sealing machine, a sealing tape bearing a layer of material which is rendered adhesive by heating, is heated and urged mechanically on to the join of the seam to be sealed to render the join waterproof or gasproof as desired.

A requirement exists for a device which will produce selective heating of the tape over a substantial length so that the adhesive layer reaches the seam to be sealed in an optimum condition for sealing.

According to the present invention there is provided a device for directing hot air on to a moving thermoplastic tape, comprising a nozzle having walls which define therein a chamber, one nozzle wall containing a two dimensional pattern of air-flow passages extending therethrough such as will discharge hot air over a rectangular area corresponding to a length of a moving tape.

In particular, the device is designed to heat a thermoplastic or thermo-activated adhesive layer on one side of the tape to melting point just before it is urged on to the join of the seam to be sealed under pressure in order to render the seam liquid or gas proof. Seam-sealing of the seams of textile fabrics can ordinarily be done only from one side, in that usually there is only one sealable side to the fabric used in the garment made from it and double-sided methods are not ordinarily useful. Further, seam-sealing is usually performed after the textile fabric has already been sewn into a garment and it is the garment itself that is being seam-sealed. This leads to some tightly or inconveniently located places that require seam-sealing and to the requirement of small and agile apparatus to reach these places. This further eliminates some apparatus types and methods known in the art from useful application here.

The invention will now be particularly described, by way of example, with reference to the accompanying drawings in which:-

Figure 1 shows a part of a seam-sealing apparatus, according to the invention, including a reel of sealing tape, a hot air source, and an array of wheels for moving the sealing tape and the fabric seam to be sealed;

Figure 2 is a perspective view of a nozzle forming part of the invention affixed to the end of a gas conduit;

Figure 3 illustrates the location of the nozzle in relation to the tape being heated and the wheels carrying forward the tape and the seamed textile to be seam-sealed; and

Figure 4 is a cross-section through the nozzle to show the interior and air holes.

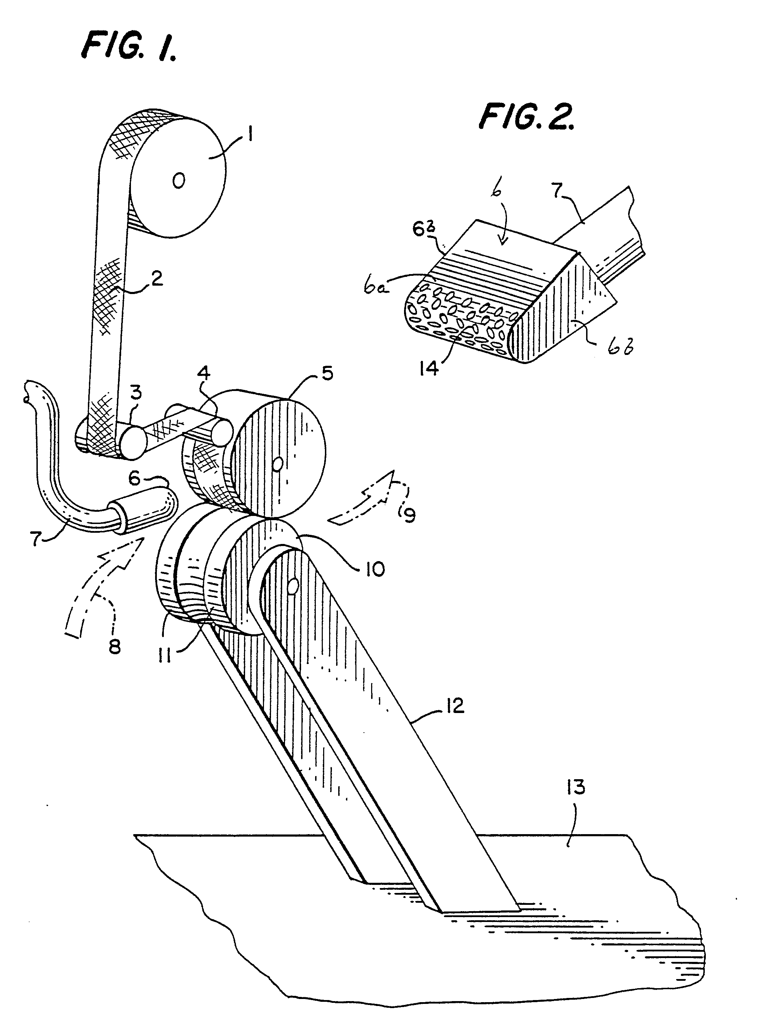

Figure 1 shows a cut-away portion 13 of a workbench attached to a seam-sealing machine at a height convenient for an operator sitting in front of the seam-sealing machine. A pair or appropriately spaced and angled metal arms 12 are affixed to and extend upwardly from bench 13 to hold a grooved wheel 10 driven by a chain (not shown). The wheel 10, which is conveniently made of stainless steel, forms a nip with a resilient elastomeric follower wheel 5. Wheel 5 carries one layer of seam-sealing tape 2 to the nip between wheels 5 and 10. Tape 2 is fed to wheel 5 by rollers 3 and 4 from a supply spool 1. After tape 2 leaves roller 4, and before it enters the nip between wheels 5 and 10, the adhesive face of the tape which faces outwardly at this point, is melted to the required degree of liquidity by hot gas flowing from a nozzle 6 located adjacent the tape. As the tape 2 is carried into the nip, the melted surface is urged under pressure of the nip against the seam of a garment to be seam-sealed. This garment, seam exposed, is carried forward from the front of the machine, in the direction of arrow 8, by pressure from the nip, and the tape 2 is applied by the wheel 5, melted adhesive face down, to the seam in the nip of the wheels 5,10 such that it overlaps the seam approximately equally on each side. The two ridges 11 of the grooved wheel 10 exert sealing pressure on the tape 2 and garment seam in the nip, and the seam-sealed garment exits the nip in the direction of arrow 9. The garment with its seam to be sealed is guided by the operator at the bench through the wheels (activated and controlled by foot treadly beneath the bench) as shown with the seam guided between the ridges 11 of wheel 10 to achieve effective seam-sealing.

Hot air (which expression as used herein is intended to include any hot gas) is supplied to the nozzle 6 by a tube 7 from a source (not shown), and the temperature of the gas is controlled upstream of tube 7. Tube 7 holds the nozzle 6 at a position selected for maximum effective control of rate and extent of melting of the adhesive coating of tape 2.

Figure 2 shows the nozzle 6 as having a convex wall 6a and two parallel-spaced flat side walls 6b, which define between them a chamber to which hot air is supplied through the tube 7. The convex wall 6a contains a two-dimensional array of passages 14 for directing heated air on to the adhesive side of tape 2. The passages 14 are of such number and size, and arranged in such a pattern that the area of the chamber surface containing the holes is substantially greater than the sum of the areas of the holes in that surface. The external surface of thenozzle containing the exit holes of the air flow passages 14 is convex about an axis parallel to the axis of the wheels 5,10 and the opposite sides of the nozzle which are interconnected by the convex perforated surface are substantially coplanar with the sides of the tape 2.

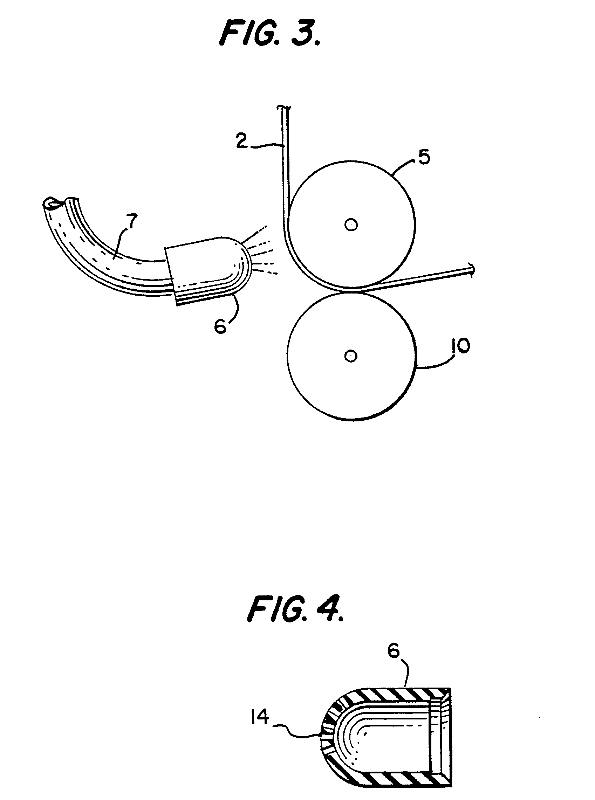

Figure 3 is a side view of the relative position and spacing between the nozzle 6, the follower wheel 5 and the grooved wheel 10 as they pass tape 2 through the nip.

Figure 4 is a cross section of nozzle 6 to show an example of the location and the relative directions of the apertures 14 in the forward part of the nozzle, the apertures having been drilled at selected angles to the convex face of the nozzle.

Nozzle 6 may be placed in different positions, at different angles and at varying distances with respect to the face of tape 2 to be melted in dependence on the composition and melting characteristics of the adhesive vary, the heat content of the issuing gas, seam tape width and thickness, the speed of seam-sealing, and tightness of access to the seam to be sealed.

A particular advantage of the preferred form of nozzle 6 is that by its construction it provides a two-dimensional turbulent pad of air evenly against the tape. The apertured external face of the nozzle is convex in front of an expansion zone for the moving hot air and the holes in the curve of the face are drilled at selected angles to give an evenly distributed two-dimensional paid of air.

The two-dimensional air flow exposes a larger area of the sealing tape to the heated air in a more even pattern of air, and thus given better heat distribution, than is possible with one-dimensional air flow, such as from a slot. Therefore, less heat is required to sufficiently melt the adhesive of the sealing tape which allows faster running, better sealing, and safer operation of the seam sealer, particularly in sealing the tape in tight, inconveniently located places.

Claims

1. A device for directing hot air on to a moving thermoplastic tape, charactersed by a nozzle (6) having walls which define therein a chamber, one nozzle wall (6a) containing a two dimensional pattern of air-flow passages (14) extending therethrough such as will discharge hot air over a rectangular area corresponding to a length of a moving tape.

2. A device according to claim 1 characterised by tubing (7) for supplying hot air to the nozzle.

3. A device according to claim 1 or claim 2, characterised in that the nozzle wall (6a) containing said air-flow passages has a total area which is substantially greater than the sum of the areas of the holes in the wall defining the inlets to said passages.

4. A device according to claim 3, characterised in that the thickness of the said nozzle wall (6a) containing the air-flow passages is no greater than four times the diameter of a single air-flow passage.

5. A device according to claim 3, characterised in that the said nozzle wall (6a) containing said pattern of air-flow passages is convex about an axis and the length of said pattern in the direction around said axis is at least fifty percent that of the width of said pattern.

6. A device according to any preceding claim characterised in that the nozzle wall containing said passages interconnects side walls (6b) of the nozzle which are parallel spaced from one another.

7. A device according to any preceding claim characterised by a pair of pinch wheels (5,10) around one of which a said tape passes in use into the pinch of the wheels, said nozzle being disposed opposite the length of tape passing around said one wheel.

0 292 121

**FIG. 1.**

**FIG. 2.**

FIG. 1. / FIG. 2.

# FIG. 3.

# FIG. 4.